# EUROPÄISCHE PATENTSCHRIFT

(11) **EP 1 388 121 B1**
(45) Veröffentlichungstag und Bekanntmachung des Hinweises auf die Patenterteilung: **30.03.2005**
(21) Anmeldenummer: 02769141.9
(22) Anmeldetag: 07.05.2002
(51) Int. Cl.: G06K 19/077

(54) **VERFAHREN UND HALBZEUG ZUR HERSTELLUNG EINER CHIPKARTE MIT SPULE**
METHOD AND SEMI-PRODUCT FOR PRODUCING A CHIP CARD WITH A COIL
PROCEDE ET DEMI-PRODUIT DESTINES A LA FABRICATION D'UNE CARTE A PUCE COMPORTANT UNE BOBINE

(30) Priorität: 09.05.2001 DE 10122416
(43) Veröffentlichungstag der Anmeldung: 11.02.2004
(73) Patentinhaber: Giesecke & Devrient GmbH, 81677 München (DE)
(72) Erfinder: WELLING, Ando, 84424 Isen (DE); BERGMANN, Matthias, 83569 Vogtareuth (DE); HOPPE, Joachim, 81377 München (DE)
(74) Vertreter: Höhfeld, Jochen
(86) Internationale Anmeldenummer: PCT/EP2002/005030
(87) Internationale Veröffentlichungsnummer: WO 2002/091292

(56) Entgegenhaltungen:
- EP-A- 0 682 321
- EP-A- 0 996 082

## Beschreibung

Die Erfindung betrifft ein Verfahren sowie ein Halbzeug zur Herstellung einer Chipkarte mit Spule und/oder Kontaktflächen zum kontaktlosen und/oder kontaktbehafteten Datenaustausch mit externen Geräten.

Aus der deutschen Offenlegungsschrift DE 44 16 697 A1 ist ein Datenträger bzw. ein Verfahren zur Herstellung eines Datenträgers gemäß dem Oberbegriff der Ansprüche 1 und 8 bekannt, bei dem innerhalb eines ein- oder mehrschichtigen Kartenaufbaus eine Spule angeordnet ist, welche zur Energieversorgung und/oder zum Datenaustausch des integrierten Schaltkreises mit externen Geräten dient. Das Modul, welches den integrierten Schaltkreis beinhaltet, weist zwei Kontaktelemente auf, die zur Verbindung mit den Kontaktflächen der Spule dienen. Die Spule ist vorzugsweise eine drahtgewickelte Spule, aus einer Metallfolie bzw. elektrisch leitenden Kunststoffolie gestanzt oder besteht aus einer geätzten Kupferspule und wird auf einer isolierenden Schicht des Kartenkörpers aufgebracht. Sie kann auch in Siebdruckverfahren hergestellt sein.

Die elektrische Verbindung zwischen den Kontaktflächen der Spule und den Kontaktflächen des integrierten Schaltkreises wird bei bekannten Kontaktierungsverfahren durch die Verwendung von Leitkleber oder anisotropen Leitkleber hergestellt bzw. verbessert. Alternativ werden die Kontaktflächen der Spulen und des integrierten Schaltkreises verlötet. Vorzugsweise werden hierzu Flip-Chip-Verfahren eingesetzt.

Bei Verwendung von gedruckten Spulen, welche vorteilhafterweise auch gedruckte Spulenanschlussflächen aufweisen, hat sich gezeigt, dass die aus Silberleitpaste bestehenden gedruckten Spulen und Anschlussflächen keine zuverlässige Verbindung mit anisotropem Leitkleber eingehen bzw. die direkte Verbindung von Dual-Interface-Modulen mit gedruckten Spulen Zuverlässigkeitsprobleme bei der Herstellung und im Betrieb mit sich bringt. Es stellt sich daher die Aufgabe, eine Chipkarte, ein Halbzeug bzw. ein Verfahren zur Herstellung der Chipkarte oder des Halbzeuges anzugeben, bei dem unter Verwendung einer gedruckten Spule eine sichere elektrische Verbindung zwischen Spule und integriertem Schaltkreis hergestellt werden kann.

Diese Aufgabe wird ausgehend von den Merkmalen des Oberbegriffs der unabhängigen Ansprüche 1, 6 und 8 durch die kennzeichnenden Merkmale dieser Ansprüche gelöst.

Vorteilhafte Ausgestaltungen der Erfindung sind in den abhängigen Ansprüchen angegeben.

Gemäss der Erfindung wird vorgesehen, dass nach dem Erzeugen der gedruckten Spule auf einem Trägerelement, welches beispielsweise eine Kernfolie im Aufbau einer laminierten Karte sein kann, eine Metallfolie angeordnet wird, welche die Spulenanschlussflächen zumindest teilweise überdeckt, wobei ein Teil der Metallfolie gegenüber den Kontaktflächen des später einzubauenden Moduls zu liegen kommt. Die mit der gedruckten Spule und der Metallfolie versehene Schicht wird in den Kartenkörper einlaminiert. Durch den Laminiervorgang werden die Metallfolie und die Kontaktflächen der gedruckten Spule aneinandergepresst, so dass hierdurch eine elektrische Verbindung zwischen gedruckter Spule und Metallfolie hergestellt wird.

Gemäss einer vorteilhaften Ausgestaltung der Erfindung ist vorgesehen, dass entweder an den Spulenkontaktflächen oder an der Metallfolie im Bereich der Spulenkontaktflächen bzw. ganzflächig Leitkleber angeordnet wird. Durch die Anordnung des Leitklebers wird die Sicherheit der elektrischen Verbindung zwischen der Spule und der Metallfolie erhöht.

Insbesondere für den Fall, dass das Modul nachträglich in den Kartenkörper eingebracht wird, ist vorgesehen, dass zur Einbringung des Moduls eine Aussparung im Kartenkörper erzeugt wird, wobei diese Aussparung so dimensioniert ist, dass die Metallfolie im Anschlussbereich zu den Kontaktflächen des integrierten Schaltkreises freigelegt wird. Beim Einsetzen des Moduls wird damit eine den Kontaktflächen gegenüberliegende Anschlussfläche für die Spule erzeugt.

Gemäss einer vorteilhaften Ausgestaltung der Erfindung wird die Aussparung für das Modul gefräst. In diesem Fall hat es sich als günstig erwiesen, die Metallfolie im Anschlussbereich zu den Kontaktflächen des integrierten Schaltkreises hin leicht anzufräsen. Auf diese Weise wird eine zuverlässigere elektrische Verbindung zu den Kontaktflächen des integrierten Schaltkreises beim Einbau des Moduls erreicht.

Die elektrische Verbindung zwischen der Metallfolie und den Anschlussflächen des integrierten Schaltkreises kann überdies verbessert werden, wenn zwischen den beiden Anschlussflächen ein anisotroper Leitkleber eingebracht wird. Der anisotrope Leitkleber wird in diesem Fall vorteilhafterweise bereits auf die Anschlussflächen des integrierten Schaltkreises aufgebracht. Beim Einlaminieren des Moduls in den Kartenkörper stellt der anisotrope Leitkleber die elektrische Verbindung zur Metallfolie her.

Mit dem erfindungsgemässen Verfahren kann erreicht werden, dass bei kontaktlosen Karten bzw. Dual-Interface-Karten gedruckte Spulen eingesetzt werden können, wobei die Sicherheit der Verbindung zwischen integriertem Schalktkreis und gedruckter Spule erhöht werden kann, so dass sie vergleichbar zu der Verbindungssicherheit bei der Verwendung von beispielsweise geätzten Kupferspulen ist.

Die Erfindung betrifft neben dem Verfahren zur Herstellung von kontaktlos und/oder kontaktbehaftet zu betreibenden Chipkarten auch ein Halbzeug, welches zur Herstellung dieser Chipkarten verwendbar ist. Dieses Halbzeug besteht aus einer Trägerschicht, auf der eine gedruckte Spule angeordnet wird, welche an den Spulenenden Spulenanschlussflächen aufweist. Über diese Spulenanschlussflächen ist jeweils eine Metallfolie angeordnet, welche diese zumindest teilweise überdecken und weiterhin in den Bereich hineinragen, an dem später der integrierte Schaltkreis bzw. das Modul einzubringen ist.

Vorzugsweise ist an der Metallfolie oder an den Spulenkontaktflächen im kontaktierenden Bereich Leitkleber aufgebracht, um eine sichere Verbindung zwischen der Metallfolie und den Spulenkontaktflächen herzustellen. Dies ist insbesondere vorteilhaft, wenn das Halbzeug, d.h. die Trägerfolie mit der gedruckten Spule und der Metallfolie erst später weiterverarbeitet wird.

Desweiteren betrifft die Erfindung eine kontaktlos zu betreibende Chipkarte bzw. eine Dual-Interface-Karte, bei der auf einer inneren Schicht des Kartenkörpers eine gedruckte Spule angeordnet ist, deren Anschlussflächen mit einer Metallfolie überdeckt ist, welche so angeordnet ist, dass sie mit den Kontaktflächen des integrierten Schaltkreises verbunden ist.

In vorteilhafter Weise ist zwischen der Metallfolie und den Kontaktflächen des integrierten Schaltkreises ein anisotroper Leitkleber angeordnet. Dies hat den Vorteil, dass die Verbindungssicherheit und die Dauerhaftigkeit der Verbindung erhöht wird.

Im folgenden wird die Erfindung anhand der Fig. 1 bis 4 näher erläutert.

Es zeigen:
- Fig. 1:: Die Vorderseite einer Dual-Interface-Karte,
- Fig. 2: die Rückseite einer Dual-Interface-Karte,
- Fig. 3 und: den Schichtaufbau einer Dual-Interface-Karte gemäss der Erfindung,
- Fig. 4: einen Querschnitt der Karte gemäss Fig. 1, 2 und 3.

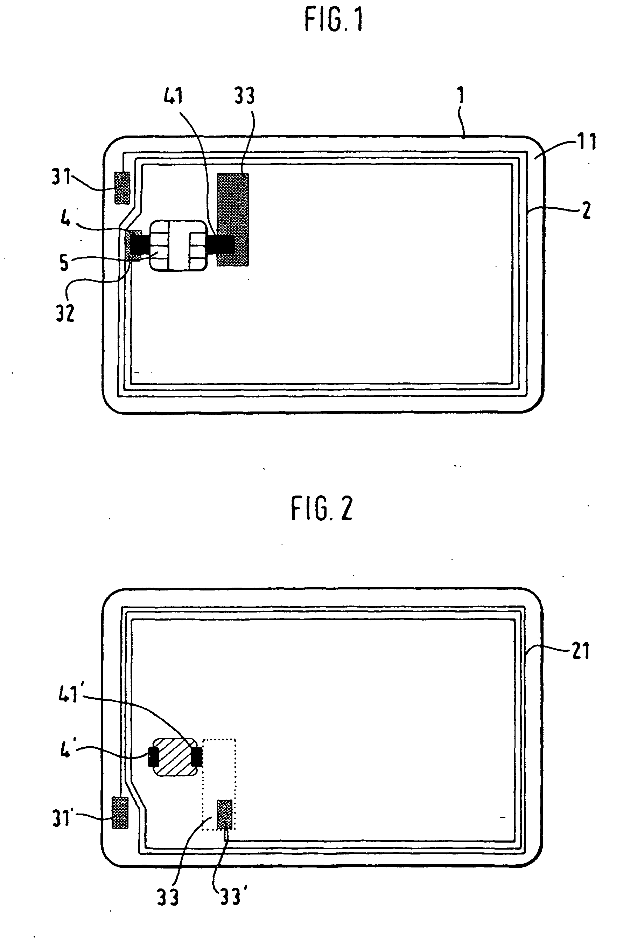

In Fig. 1 ist die Vorderseite einer Chipkarte 1 dargestellt. Es wird dabei davon ausgegangen, dass die Deckschichten aus transparentem Material bestehen, so dass die erfindungsgemässen Elemente erkennbar sind.

In einer Kernschicht 11 des Kartenkörpers 1 ist eine Spule 2 mit den Anschlussflächen 31 und 32 angeordnet. Die erste Spulenanschussfläche 31 dient zur Durchkontaktierung zur Spulenanschlussfläche 31' der Spule 21, welche sich auf der Rückseite der Kernfolie 11 befindet. In der Fig. 1 ist eine weitere Anschlussfläche 33 dargestellt, welche ebenfalls zur Spule 21 auf der Rückseite des Trägerelements hin durchkontaktiert ist. Die Spulenkontaktflächen 32 und 33 dienen zur Kontaktierung der Spule mit den Anschlussflächen des integrierten Schaltkreises, welcher im Modul 5 enthalten ist. Diese Verbindung erfolgt nicht direkt sondern über eine Metallfolie 4 bzw. 41, welche jeweils die Anschlussflächen 32 bzw. 33 teilweise überdecken und zu den Anschlussflächen des integrierten Schaltkreises im Modul 5 hin führen.

Die Metallfolien 4 und 41 bestehen bevorzugt aus Kupfer, Silber oder versilbertem Kupfer, um eine gute Leitfähigkeit und eine sichere Verbindung zu gewährleisten.

In Fig. 2 ist die Unterseite der Karte 1 dargestellt. Auf dieser Seite befindet sich der zweite Teil der Spule 21 mit den Anschlussflächen 31' und 33', wobei diese Anschlussflächen jeweils zu den Anschlussflächen 31 und 33 der Vorderseite durchkontaktiert sind. Die auf der Vorderseite liegende Anschlussfläche 33 ist in Fig. 2 gestrichelt dargestellt. Wie man aus der Fig. 2 erkennen kann, führen die Metallfolien 4 bzw. 41, (in Fig. 2 sind die Rückseiten 4' und 41' erkennbar), zu den Anschlussflächen des integrierten Schaltkreises, die in der Figur nicht explizit dargestellt sind.

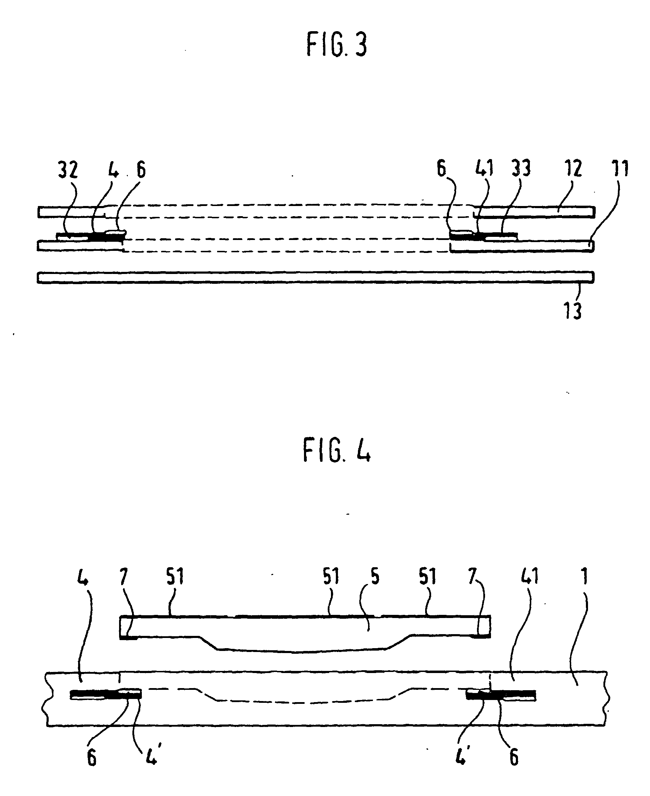

Die Fig. 3 zeigt einen mehrschichtigen Kartenaufbau im Querschnitt. Dieser Kartenaufbau besteht aus der Trägerfolie 11, auf der die Spule 2 und 2' (in Fig. 3 nicht dargestellt) mit den Spulenanschlussflächen 31, 32 und 33 bzw. 31'und 33' angeordnet ist. Über den Spulenanschlussflächen 32 uns 33 ist die Metallfolie 4 bzw. 4' angeordnet, welche in vorteilhafter Weise mit einem elektrisch leitfähigen Kleber mit den Spulenanschlussflächen 32 verbunden ist.

Im Bereich der Anschlussflächen des integrierten Schaltkreises ist in Fig. 3 ein anisotroper Leitkleber 6 angeordnet, welcher der Verbindung mit dem Modul 5, d.h. den Anschlussflächen 7 des Moduls 5 dient. Zwischen der Metallfolie 4 und den Spulenanschlussflächen 32 bzw. 33 kann ebenfalls ein leitfähiger Kleber angeordnet werden.

Die Fig. 4 zeigt eine Karte, welche zum kontaktlosen und kontaktbehafteten Datenaustausch geeignet ist im Querschnitt. Das Modul 5 enthält einen integrierten Schaltkreis, der in der Figur nicht dargestellt ist. Der integrierte Schaltkreis kann durch die Kontaktflächen 51 über kontaktbehafteten Datenaustausch mit der Aussenwelt kommunizieren. Zum berührungslosen Datenaustausch dient die Spule 2, 21 von der lediglich die Anschlussflächen 32 und 33 in der Figur dargestellt sind. Die Kontaktierung der Spule 2, 21 mit den Anchlussflächen 7 des integrierten Schaltkreises erfolgt durch die Metallfolien 4, 41, welche auf den Spulenanschlussflächen 32 und 33 aufgebracht sind. Bevorzugt wird zur Kontaktierung anisotroper Leitkleber 6 verwendet, der entweder, wie in der Figur dargestellt, vor dem Einsetzen des Moduls 5 auf die Metallfolie 4 bzw. 41 aufgebracht wird oder bereits an den Kontaktflächen 7 des integrierten Schaltkreises angeordnet ist.

## Patentansprüche

1. Verfahren zur Herstellung von kontaktlos und/oder kontaktbehaftet zu betreibenden Chipkarten (1), mit einem mehrschichtigen Kartenkörper, einem integrierten Schaltkreis und zumindest einer Spule (2,21) zum Datenaustausch sowie zur Stromversorgung, wobei die Spule (2,21) in Drucktechnik auf einer oder mehreren Schichten (11) des Kartenkörpers aufgebracht ist, **dadurch gekennzeichnet, dass** nach dem Erzeugen der gedruckten Spule eine Metallfolie (4, 41) über die Spulenanschlüsse (32, 33) gelegt und in den Kartenkörper einlaminiert wird, wodurch die Verbindung zwischen den Kontaktflächen (32, 33) der gedruckten Spule und der Metallfolie (4, 41) hergestellt wird und dass Kontaktflächen des integrierten Schaltkreises über die Metallfolie mit den Spulenanschlüssen elektrisch leitend verbunden werden.

2. Verfahren nach Anspruch 1, **dadurch gekennzeichnet, dass** an den Spulenkontaktflächen (32, 33) oder der Metallfolie (4, 41) im Bereich der Spulenkontaktflächen (32, 33) Leitkleber angeordnet wird.

3. Verfahren nach Anspruch 1 oder 2, **dadurch gekennzeichnet, dass** zur Einbringung eines Moduls (5), welches den integrierten Schaltkreis enthält, eine Aussparung im Kartenkörper erzeugt wird, welche so dimensioniert ist, dass die Metallfolie (4,41) zumindest im Anschlussbereich zu den Kontaktflächen des integrierten Schaltkreises hin freigelegt wird.

4. Verfahren nach Anspruch 3, **dadurch gekennzeichnet, dass** die Aussparung für das Modul (5) gefräst wird, wobei die Metallfolie (4,41) zumindest im Anschlussbereich zu den Kontaktflächen des integrierten Schaltkreises hin freigelegt bzw. angefräst wird.

5. Verfahren nach einem der Ansprüche 1 bis 4, **dadurch gekennzeichnet, dass** zwischen der Metallfolie (4,41) und den Anschlussflächen des integrierten Schaltkreises ein anisotroper Leitkleber angeordnet wird.

6. Halbzeug zur Herstellung von kontaktlos zu betreibenden Chipkarten (1), mit einem mehrschichtigen Kartenkörper, einem integrierten Schaltkreis und zumindest einer Spule (2, 21) zum Datenaustausch sowie zur Stromversorgung, wobei die Spule in Drucktechnik auf einer oder mehreren Schichten des Kartenkörpers aufgebracht ist, **dadurch gekennzeichnet, dass** auf einer Kernfolie (11) ein oder beidseitig eine gedruckte Spule (2, 21) mit Spulenanschlussflächen (32, 33), welche ebenfalls gedruckt sind, angeordnet sind, wobei über den Spulenanschlussflächen (32,33) zur elektrisch leitenden Verbindung der Spulenanschlüsse mit Anschlussflächen eines integrierten Schaltkreises eine Metallfolie (4,41) angeordnet ist.

7. Halbzeug nach Anspruch 6, **dadurch gekennzeichnet, dass** die Metallfolie (4, 41)mittels leitfähigen Kleber mit den Spulenanschlussflächen (32, 33) verbunden ist.

8. Kontaktlos zu betreibende Chipkarte mit einem mehrschichtigen Kartenkörper, einem integrierten Schaltkreis und zumindest einer Spule zum Datenaustausch sowie zur Stromversorgung, wobei die Spule in Drucktechnik auf eine Schicht des Kartenkörpers aufgebracht ist, **dadurch gekennzeichnet, dass** die gedruckte Spule (2, 21) auf einer Kernfolie (11) des Kartenkörpers angebracht ist, und Spulenanschlussflächen (32, 33) aufweist, die von einer Metallfolie (4, 41) überdeckt sind , welche eine elektrisch leitenden Verbindung der Spulenanschlüsse mit Anschlussflächen des integrierten Schaltkreises herstellt.

## Claims

1. A method for producing chip cards (1) for contactless and/or contact-type operation having a multilayer card body, an integrated circuit and at least one coil (2, 21) for data exchange and for power supply, the coil (2, 21) being applied to one or more layers (11) of the card body by printing technology, **characterized in that** after production of the printed coil a metal foil (4, 41) is placed over the coil terminals (32, 33) and laminated into the card body, thereby producing the connection between the contact areas (32, 33) of the printed coil and the metal foil (4, 41), and contact areas of the integrated circuit are connected electroconductively with the coil terminals via the metal foil.

2. A method according to claim 1, **characterized in that** conductive adhesive is disposed on the coil contact areas (32, 33) or the metal foil (4, 41) in the region of the coil contact areas (32, 33).

3. A method according to claim 1 or 2, **characterized in that** for incorporating a module (5) containing the integrated circuit, a gap in the card body is produced that is dimensioned so that the metal foil (4, 41) is exposed at least in the connecting region to the contact areas of the integrated circuit.

4. A method according to claim 3, **characterized in that** the gap for the module (5) is milled, the metal foil (4, 41 ) being exposed or milled at least in the connecting region to the contact areas of the integrated circuit.

5. A method according to any of claims 1 to 4, **characterized in that** an anisotropic conductive adhesive is disposed between the metal foil (4,41) and the terminal areas of the integrated circuit.

6. A semifinished product for producing contactlessly operated chip cards (1) having a multilayer card body, an integrated circuit and at least one coil (2,21) for data exchange and for power supply, the coil being applied to one or more layers of the card body by printing technology, **characterized in that** a printed coil (2, 21 ) having coil terminal areas (32, 33) that are likewise printed are disposed on a core foil (11) on one or both sides, a metal foil (4, 41) being disposed over the coil terminal areas (32, 33) for electroconductively connecting the coil terminals with terminal areas of an integrated circuit.

7. A semifinished product according to claim 6, **characterized in that** the metal foil (4, 41) is connected with the coil terminal areas (32, 33) by conductive adhesive.

8. A contactlessly operated chip card having a multilayer card body, an integrated circuit and at least one coil for data exchange and for power supply, the coil being applied to a layer of the card body by printing technology, **characterized in that** the printed coil (2, 21) is mounted on a core foil (11) of the card body and has coil terminal areas (32, 33) that are covered by a metal foil (4, 41) which produces an electroconductive connection of the coil terminals with terminal areas of the integrated circuit.

## Revendications

1. Procédé de fabrication de cartes à puce (1) fonctionnant sans contact et/ou avec contact, comportant un corps de carte multicouches, un circuit intégré et au moins une bobine (2,21) pour l'échange de données ainsi que pour l'alimentation électrique, dans lequel la bobine (2, 21) est appliquée sur une ou plusieurs couches (11) du corps de carte par une technique d'impression, **caractérisé en ce que**, après la réalisation de la bobine imprimée, est placée, par dessus les bornes (32, 33) de la bobine, une feuille métallique (4, 41), laquelle est stratifiée dans le corps de carte, de sorte que soit réalisée une liaison entre les surfaces de contact (32, 33) de la bobine imprimée et la feuille métallique (4, 41), et **en ce que** des surfaces de contact du circuit intégré soient reliées, de façon conductrice de l'électricité, aux bornes de la bobine par l'intermédiaire de la feuille métallique.

2. Procédé selon la revendication 1, **caractérisé en ce que** l'on applique un adhésif conducteur aux surfaces (32, 33) de contact de la bobine ou sur la feuille métallique (4, 41) dans la zone des surfaces (32, 33) de contact de la bobine.

3. Procédé selon la revendication 1 ou 2, **caractérisé en ce que**, pour l'application d'un module (5), qui contient le circuit intégré, on réalise, dans le corps de carte, un évidement dimensionné de sorte que la feuille métallique (4, 41), au moins dans la zone de raccordement aux surfaces de contact du circuit intégré, soit exposée.

4. Procédé selon la revendication 3, **caractérisé en ce que** l'évidement pour le module (5) est obtenu par fraisage, de sorte que la feuille métallique (4, 41), au moins dans la zone de raccordement avec les surfaces de contact du circuit intégré, est exposée ou, respectivement, fraisée.

5. Procédé selon l'une des revendications 1 à 4, **caractérisé en ce que**, entre la feuille métallique (4, 41) et les surfaces de raccordement du circuit intégré, un adhésif conducteur anisotropique est disposé.

6. Produit semi-fini pour la fabrication de cartes à puce (1) fonctionnant sans contact, comportant un corps de carte multicouches, un circuit intégré et au moins une bobine (2, 21) pour l'échange de données ainsi que pour l'alimentation électrique, dans lequel la bobine est appliquée sur une ou plusieurs couches du corps de carte par une technique d'impression, **caractérisé en ce que**, sur un ou les deux côtés d'une feuille de noyau (11), on dispose, une bobine imprimée (2, 21) dont les surfaces de raccordement de bobine (32, 33), sont également imprimées, et dans lequel, pour réaliser le raccordement conducteur de l'électricité des bornes de la bobine avec des surfaces de raccordement d'un circuit intégré, on dispose une feuille métallique (4, 41) par dessus les surfaces de raccordement (32, 33) de la bobine.

7. Produit semi-fini selon la revendication 6, **caractérisé en ce que** la feuille métallique (4, 41) est reliée aux surfaces de raccordement (32, 33) de la bobine au moyen d'un adhésif conducteur de l'électricité.

8. Carte à puce destinée à fonctionner sans contact comportant un corps de carte multicouches, un circuit intégré et au moins une bobine pour l'échange de données, ainsi que pour l'alimentation électrique, dans laquelle la bobine est appliquée sur une couche du corps de carte, par une technique d'impression, **caractérisé en ce que** la bobine imprimée (2, 21) est appliquée sur une feuille de noyau (11) du corps de carte, et présente des surfaces de raccordement (32, 33) de bobine, qui établit une liaison conductrice de l'électricité des bornes de la bobine avec des surfaces de raccordement du circuit intégré, qui sont couvertes d'une feuille métallique (4, 41).
